# EUROPEAN PATENT APPLICATION

(11) **EP 2 120 396 A1**
(43) Date of publication of application: **18.11.2009**
(21) Application number: 09153849.6
(22) Date of filing: 27.02.2009
(51) Int. Cl.: H04L 12/24

(54) **Method, device and system for managing network devices**

(30) Priority: 15.05.2008 CN 200810097596
(71) Applicant: Huawei Technologies Co., Ltd., Longgang District, Shenzhen Guangdong 518129 (CN)
(72) Inventor: Chi, Haixia, 518129, Shenzhen, Guangdong (CN); Sun, Yi, 518129, Shenzhen, Guangdong (CN); Lai, Junchen, 518129, Shenzhen, Guangdong (CN)
(74) Representative: Körber, Martin Hans

(57) **Abstract**

A method, device and system for managing network devices is disclosed. The method includes: after detecting that a primary network device is connected, sending an information command to a secondary network device to query the management configuration information of the primary network device; receiving response information sent by the secondary network device in response to the information command, where the response information includes the management configuration information of the primary network device; using the management configuration information to manage the primary network device.

## Description

This application claims priority to Chinese Patent Application no. 200810097596.6, entitled "METHOD, DEVICE AND SYSTEM FOR MANAGING NETWORK DEVICES" and filed with the Chinese Patent Office on May 15, 2008, which is hereby incorporated by reference in its entirety.

### FIELD

The present invention relates to the field of device management, in particular, to a method, device and system for managing network devices.

### BACKGROUND

With fast development of information technologies, communication technologies and networks give rise to miscellaneous networks, network management devices and network devices. A network management device manages network devices in a network. However, network devices are diversified, and each different network device supports different functions or supports the same function in different ways.

In a related art, in order for a network management device to support diversified devices, the developer needs to understand the types and functions of the network device types that need to be supported before developing the network management device. In the process of developing the network management device, the management configuration information of the network device is stored in the network management device by certain means such as configuration files and record databases. After the network management device is put into operation, the network management device manages network devices according to the stored management configuration information.

The inventors noticed during the implementation of the present invention, that the related art is disadvantageous in that the existing network management device may only manage a network device preconfigured with the management configuration information, but may not manage all types of network devices; therefore, the management is not flexible.

### SUMMARY

In one embodiment,, a network device management method is provided. The network device management method includes: after detecting that a primary network device is connected, sending an information command to a secondary network device to query the management configuration information of the primary network device; receiving response information sent by the secondary network device in response to the information command, where the response information includes the management configuration information of he primary network device; and using the management configuration information to manage the primary network device.

In one embodiment, a network device management method is provided. The network device management method includes: receiving an information command sent by a network management device for querying the management configuration information of a primary network device; and sending response information to the network management device in response to the information command, where the response information includes the management configuration information of the primary network device.

In one embodiment, a network management device is provided. The network device management device includes a detecting unit, an information querying unit, an information receiving unit, and a device management unit. The detecting unit is adapted to detect whether a primary network device is connected. The information querying unit is adapted to send an information command to the secondary network device to query the management configuration information of the primary network device after detecting that the primary network device is connected. The information receiving unit is adapted to receive response information from the secondary network device in response to the information command after the information querying unit sends an information command to the secondary network device to query the management configuration information of the primary network device, where the response information includes the management configuration information of the primary network device. The device management unit is adapted to use the management configuration information to manage the primary network device.

In one embodiment, a network device is provided. The network device includes an information query receiving unit and an information sending unit. The information query receiving unit is adapted to receive an information command sent by the network management device for querying the management configuration information of the primary network device. The information sending unit is adapted to send response information to the network management device in response to the information command received by the information query receiving unit, where the response information includes the management configuration information of the primary network device.

In one embodiment, a network management system is provided. The network management system includes a network management device and a secondary network device. The network management device is adapted to: send an information command to the secondary network device to query the management configuration information of the primary network device after detecting that the primary network device is connected; receive response information sent by the secondary network device in response to the information command, where the response information includes the management configuration information of the primary network device; and use the management configuration information to manage the primary network device. The secondary network device is adapted to: receive the information command sent by a network management device for querying the management configuration information of a primary network device; and send response information to the network management device in response to the information command, where the response information includes the management configuration information of the primary network device.

According to the embodiments of the present invention, the network management device may send a command of querying the management configuration information to a network device rather than the network management device to obtain the management configuration information, and use the management configuration information to manage network devices. Therefore, even if no management configuration information corresponding to the network device is stored, the network management device may also obtain the management configuration information of the network device to manage the network devices of new types, thus making the network device management more flexible.

### BRIEF DESCRIPTION OF THE DRAWINGS

Figure 1 shows a flowchart of the network device management method in the first embodiment of the present invention;

Figure 2 shows a flowchart of the network device management method in the second embodiment of the present invention;

Figure 3 shows a flowchart of the network device management method in the third embodiment of the present invention;

Figure 4 shows a flowchart of the network device management method in the fourth embodiment of the present invention;

Figure 5 shows a flowchart of the network device management method in the fifth embodiment of the present invention;

Figure 6 shows a structure of a network management device in the first embodiment of the present invention;

Figure 7 shows a structure of a network management device in the second embodiment of the present invention;

Figure 8 shows a structure of a network management device in the third embodiment of the present invention;

Figure 9 shows a structure of a network device in the first embodiment of the present invention;

Figure 10 shows a structure of a network device in the second embodiment of the present invention;

Figure 11 shows a network system in the first embodiment of the present invention; and

Figure 12 shows a network system (namely, signaling flow) in the second embodiment of the present invention.

### DETAILED DESCRIPTION

In order to make the technical solution, objectives and merits of the present invention clearer, the present invention is hereinafter described in detail by reference to accompanying drawings and exemplary embodiments.

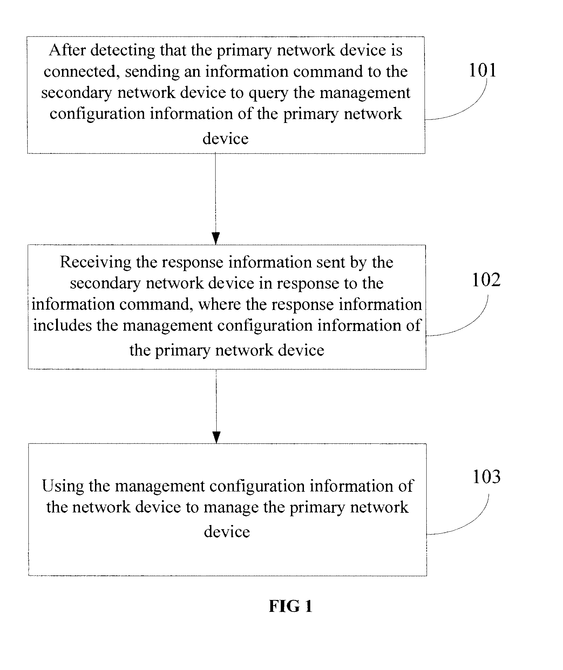

Figure 1 shows a network management method in the first embodiment of the present invention. The method includes the following steps:

Step 101: After detecting that a primary network device is connected, a network management device sends an information command to a secondary network device to query management configuration information of the primary network device.

In the embodiment, the primary network device is relative to the secondary network device. The primary network device refers to object whose management configuration information is queried; and the secondary network device may be the primary network device itself, or an object which includes the primary network device and other network management devices or servers. The primary network device, other network management devices or servers may be called a network device, and may be called a secondary network device only if the management configuration information can be queried from them, which is the same hereinafter. The information command is sent by the network management device to the secondary network device for obtaining the management configuration information of the primary network device. The information command may be a newly added command, or an extension of an old command. The embodiment of the present invention does not restrict the information command. Any information command is applicable in the embodiment only if it seeks the management configuration information of the primary network device. The "new" primary network device means that the primary network device is newly added, and does not connote the device type. The "type" here does not necessarily refer to a model. The network device of the same "model" but different version may be a different type. The type in the embodiment of the present invention is based on the difference of functionalities supported by the primary network device.

Step 102: The network management device receives response information sent by the secondary network device in response to the information command in step 101, where the response information includes the management configuration information of the primary network device.

The management configuration information applied in the embodiment of the present invention may include: functions supported by the primary network device, for example, setting and querying alarm screening states, setting and querying alarm reporting, setting and querying alarm relevance suppression, alarm resolution data, performance functions supported by the primary network device (for example, querying the object collection that supports performance statistics, performance resolution data, performance statistic period), and possibly other information. The embodiment of the invention does not restrict the specific information included in the management configuration information.

Step 103: The network management device uses the management configuration information to manage the primary network device.

In the embodiment of the present invention, the network device may send a command of querying the management configuration information to obtain the management configuration information of the primary network device, and use the management configuration information to manage the primary network device. Therefore, even if no management configuration information corresponding to the primary network device is stored, the network management device may also obtain the management configuration information of the primary network device to manage the new type of primary network device.

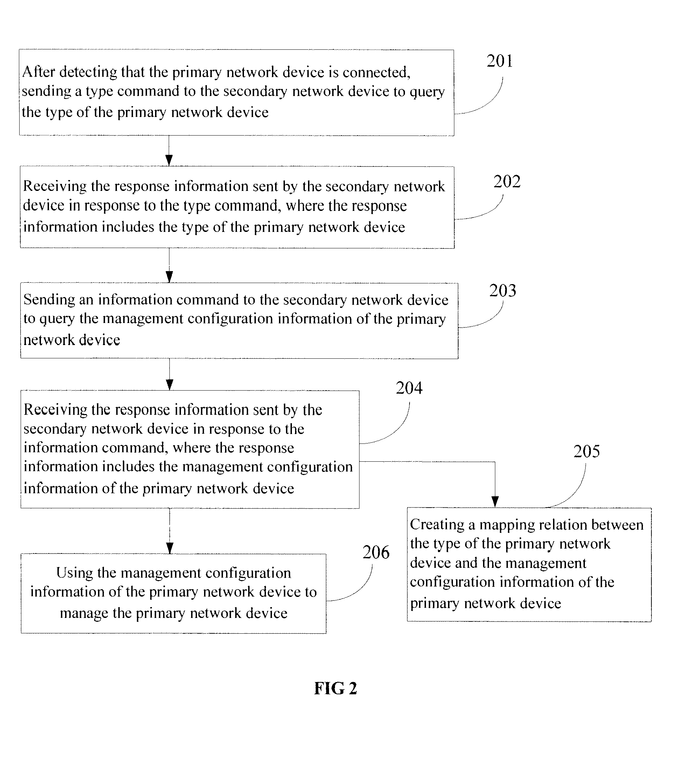

Figure 2 shows a network device management method in the second embodiment of the present invention. The method includes:

Step 201: After detecting that a new primary network device is connected, a network management device sends a type command to a secondary network device to query the type of the primary network device.

Like the first embodiment of the network device management method, the primary network device is relative to the secondary network device. The primary network device refers to an object whose management configuration information is queried; and the secondary network device may be the primary network device itself, or an object which includes the primary network device and other network management devices or servers. The primary network device, other network management devices or servers may be called a network device, and may be called a secondary network device only if the type can be queried from them, which is the same hereinafter.

Step 202: The network management device receives response information sent by the secondary network device in response to the type command in step 101, where the response information includes the type of the primary network device.

Step 203: The network management device sends an information command to the secondary network device to query the management configuration information of the primary network device.

Step 204: The network management device receives the response information sent by the secondary network device in response to the information command in step 203, where the response information includes the management configuration information of the primary network device.

Step 205: The network management device creates a mapping relation between the type of the primary network device received in step 302 and the management configuration information of the primary network device received in step 204. The network management device may store the mapping relation, and may resolve the management configuration information primary for ease of storing and reading in the network management device.

Step 206: The network management device uses the management configuration information to manage the primary network device.

In the embodiment, the type command is sent by the network management device to the secondary network device to seek the type of the primary network device. The type command may be a newly added command, or an extension of the old command. The embodiment does not restrict the type command, and any type command is applicable in the embodiment only if it seeks a network device type. In step 205, the mapping relation is created in order to manage the primary network device connected subsequently: when the network management device is connected to a new primary network device, the network management device may search for the management configuration information in the mapping relation with the type of the new primary network device inside the network management device. In this way, the network management device avoids the trouble of querying the management configuration information of each specific primary network device. The type-related step 201 and step 202 may occur before or after steps 203 and 204 related to the management configuration information. The type may be obtained before or after the management configuration information, or the type and the management configuration information are obtained simultaneously. The sequence of performing such steps is not limited in the embodiment of the invention.

In the embodiment, the network management device uses the received management configuration information to manage the connected primary network device, and creates a mapping relation between the type of the primary network device and the management configuration information of the primary network device. This process may be regarded as an initialization process of retrieving management configuration information when the network management device is initially put into use. This process provides a management configuration information library for the network management device to manage subsequently connected primary network devices, so that the network management device may manage other primary network devices of the same type.

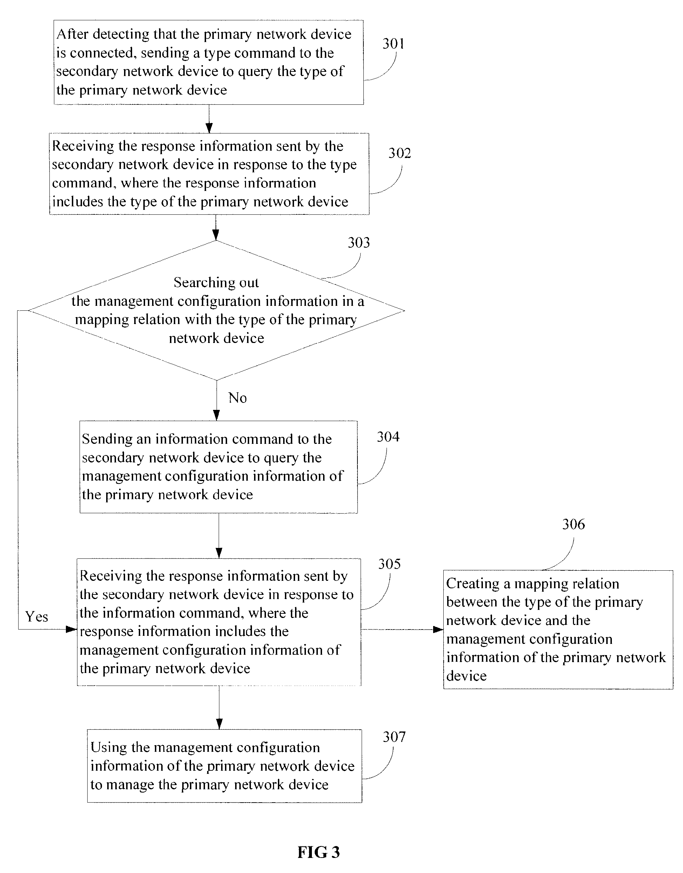

Figure 3 shows a network management method in the third embodiment of the present invention. The method includes:

Step 301: A network management device sends a type command to a secondary network device to query the type of the primary network device.

Step 302: The network management device receives response information sent by the secondary network device in response to the type command, where the response information includes the type of the primary network device.

Step 303: The network management device searches for the management configuration information in a mapping relation with the type of the primary network device among the created mapping relations.

If no management configuration information in the mapping relation with the type is found, the process proceeds to the following step:

Step 304: The network management device sends an information command to the secondary network device to query the management configuration information of the network device.

Step 305: The network management device receives response information sent by the secondary network device in response to the information command in step 304, where the response information includes the management configuration information of the primary network device:

Step 306: The network management device creates a mapping relation between the type and the management configuration information of the primary network device.

Step 307: The network management device uses the management configuration information in the mapping relation with the type of the primary network device to manage the network device.

If any management configuration information in the mapping relation with the type is found, the process proceeds to step 307.

In the embodiment, the network devices connected with the network management device come in two circumstances: (i) The mapping relation is already created between the management configuration information and the type of the primary network device, and the network management device may use the management configuration information in a mapping relation with the type of the primary network device to manage the primary network device directly. The mapping relation may be stored in the network management device in the manufacturing process. Particularly, the manufacturer may create the mapping relation between the type of commonly used primary network devices and the management configuration information of the primary network device, and store the mapping relation in the network management device as an inherent part of the network management device. Alternatively, the network management device may create the mapping relation dynamically after being put into use; (ii) No mapping relation is created between the management configuration information and the type of the primary network device. In this case, the network management device queries and receives the management configuration information, and creates the mapping relation. The network management device may manage the primary network devices of the same type and the primary network devices of a new type.

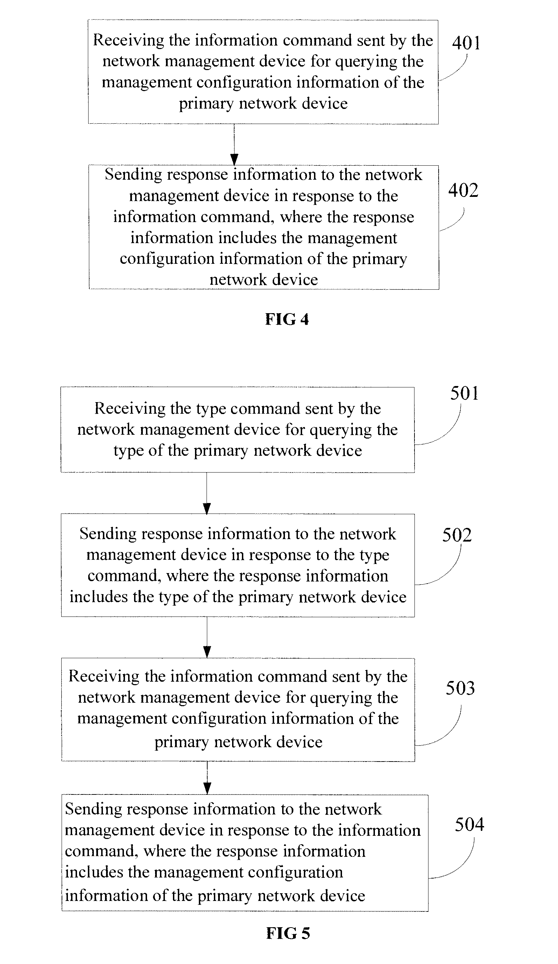

Figure 4 shows a network management method in the fourth embodiment of the present invention. The method includes:

Step 401: A secondary network device receives an information command sent by a network management device for querying management configuration information of the primary network device.

Step 402: The secondary network device sends response information to the network management device in response to the information command in step 401, where the response information includes the management configuration information of the primary network device.

In the embodiment, the secondary network device can provide management configuration information that includes data and formats stipulated uniformly in a specific field such as an industrial field or a manufacturer field, maintain the management configuration information according to the unified format and contents, and provide the outside with unified modes of querying, sending, and receiving management configuration information and querying the type of the primary network device uniformly. In this way, the primary network device of the new type can be managed by the network management device conveniently.

Figure 5 shows a network management method in the fifth embodiment of the present invention. The method includes:

Step 501: A secondary network device receives a type command sent by a network management device for querying the type of a primary network device.

Step 502: The secondary network device sends response information to the network management device in response to the type command, where the response information includes the type of the primary network device.

Step 503: The secondary network device receives the information command sent by the network management device for querying the management configuration information of the primary network device.

Step 504: The secondary network device sends response information to the network management device in response to the information command, where the response information includes the management configuration information of the primary network device.

In the embodiment, a mapping relation already exists, which facilitates the network device to search for the management configuration information. If no such information is found, a new mapping relation may be created, namely, the network management device may interconnect the primary network devices of new types which increase continuously. For the subsequently connected primary network devices of the same type, the network management device manages them directly through the existing management configuration information for which a mapping relation has been created. The secondary network device enables the network management device to perform management by sending type information, or by sending type information and management configuration information.

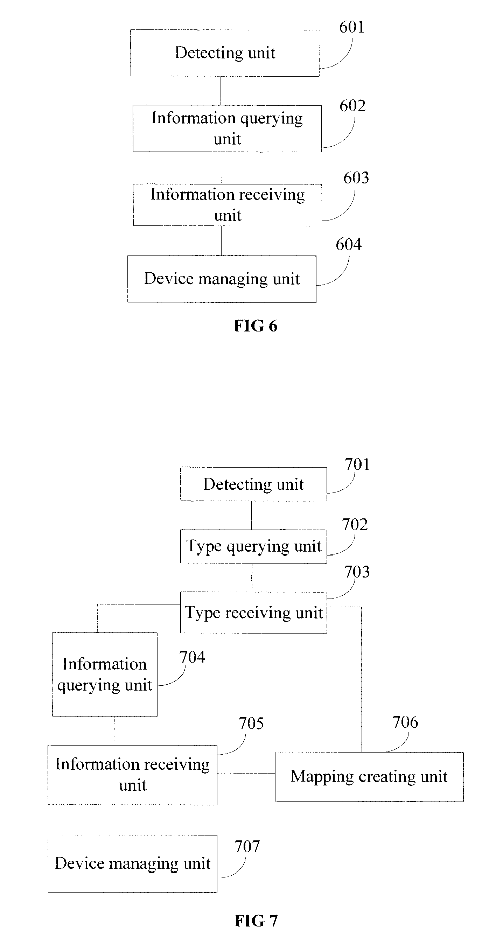

Figure 6 shows a network management device in the first embodiment of the present invention. The network management device includes: a detecting unit 601, adapted to detect whether a primary network device is connected; an information querying unit 602, adapted to send an information command to a secondary network device to query the management configuration information of the primary network device if the detecting unit 601 detects that the primary network device is connected; an information receiving unit 603, adapted to receive response information from the secondary network device in response to the information command after the information querying unit 602 sends an information command to the secondary network device to query the management configuration information of the primary network device, where the response information includes the management configuration information of the primary network device; and a device management unit 604, adapted to use the management configuration information received by the information receiving unit 603 to manage the primary network device.

In the embodiment, the network management device obtains the management configuration information through an information querying unit and an information receiving unit; the device management unit further uses the management configuration information to manage the primary network device. Therefore, even if no management configuration information corresponding to the primary network device is stored, the network management device may also obtain the management configuration information corresponding to the primary network device to manage the primary network device, and the network management device can manage primary network devices of new types.

Figure 7 shows a network management device in the second embodiment of the present invention. The network management device includes: a detecting unit 701, adapted to detect whether a primary network device is connected; a type querying unit 702, adapted to send a type command to the secondary network device to query the type of the primary network device if the detecting unit 701 detects that the primary network device is connected; a type receiving unit 703, adapted to receive response information from the secondary network device in response to the type command after the type querying unit 702 sends a type command to the secondary network device to query the type of the primary network device, where the response information includes the type of the primary network device; an information querying unit 704, adapted to send an information command to the secondary network device to query the management configuration information of the primary network device after the detecting unit 701 detects the primary network device; an information receiving unit 705, adapted to receive the response information from the secondary network device in response to the information command sent by the information querying unit 704, where the response information includes the management configuration information of the primary network device; a mapping creating unit 706, adapted to create a mapping relation between the type of the primary network device and the management configuration information of the primary network device; and a device management unit 707, adapted to use the management configuration information of the primary network device to manage the primary network device.

Unlike the previous embodiment, the network management device in the embodiment has additional units such as type querying unit 702, type receiving unit 703, and mapping creating unit 706. Through the type querying unit 702, type receiving unit 703, information querying unit 704, and information receiving unit 705, the network management device searches out the type of the primary network device and the corresponding management configuration information, and uses the mapping creating unit 706 to create a mapping relation between the type of the primary network device and the corresponding management configuration information. The network management device may perform an initialization process of retrieving management configuration information and creating a mapping relation when the network management device is initially put into use. This process provides a management configuration information library for the network management device to manage subsequently connected network devices, so that the network management device may manage other primary network devices of the same type, thus improving the capability of the network management device interconnecting with the primary network devices of new types.

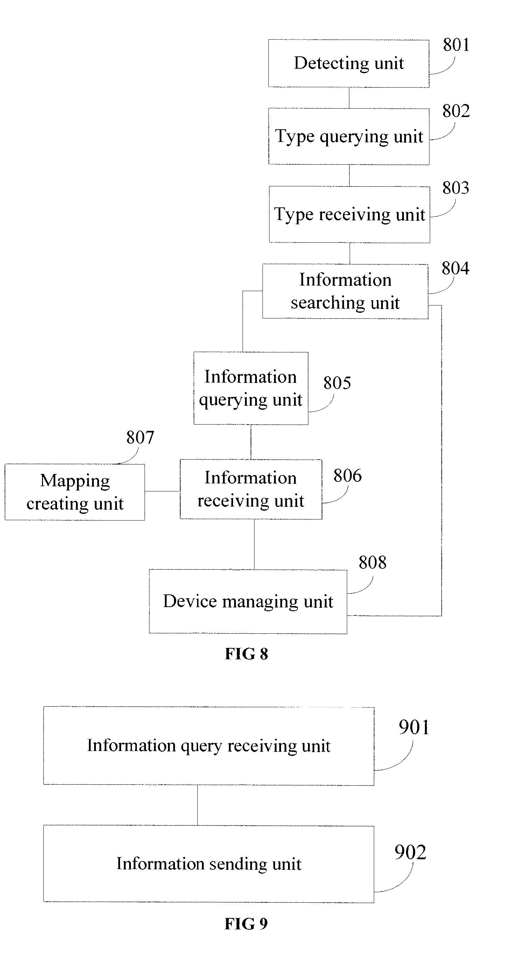

Figure 8 shows a network management device in the third embodiment of the present invention. The network management device includes: a detecting unit 801, adapted to detect whether a primary network device is connected; a type querying unit 802, adapted to send a type command to the secondary network device to query the type of the primary network device if the detecting unit 801 detects that the primary network device is connected; a type receiving unit 803, adapted to receive response information from the secondary network device in response to the type command sent by the type querying unit 802, where the response information includes the type of the primary network device; an information searching unit 804, adapted to search for the management configuration information in a mapping relation with the type of primary network device according to the mapping relation created by a mapping creating unit 807 after the type receiving unit 803 receives the type of the primary network device; an information querying unit 805 is adapted to send an information command to the secondary network device to query the management configuration information of the primary network device, when the information searching unit 804 finds no management configuration information in a mapping relation with the type of the primary network device; an information receiving unit 806, adapted to receive the response information from the secondary network device in response to the information command sent by the information querying unit 805, where the response information includes the management configuration information of the primary network device; a mapping creating unit 807, adapted to create a mapping relation between the type of the primary network device and the received management configuration information of the primary network device; and a device management unit 808, adapted to use the management configuration information in a mapping relation with the type of the primary network device to manage the network device.

The device management unit 808 uses the management configuration information to manage the primary network device when the information searching unit 804 finds any management configuration information in a mapping relation with the type of the primary network device.

In the embodiment , the primary network devices connected with the network management device come in two circumstances: (i) The management configuration information of the primary network device is stored in the network management device, and a mapping relation is already created between the management configuration information and the type of the primary network device, and the network management device may use the management configuration information to manage the primary network device directly. The mapping relation may be stored in the network management device in the manufacturing process. Particularly, the manufacturer may create a mapping relation between the type of commonly used primary network devices and the management configuration information of the primary network device, and store the mapping relation in the network management device as an inherent part of the network management device. Alternatively, the network management device may create the mapping relation dynamically after being put into use. (ii) No management configuration information of the primary network device is stored in the network management device, and no mapping relation is created between the management configuration information and the type of the primary network device. In this case, the network management device queries and receives the management configuration information, and creates a mapping relation. The network management device may manage the primary network devices of the same type and the primary network devices of a new type flexibly.

Figure 9 shows a network device in the first embodiment of the present invention, where the information query receiving unit 901 is adapted to receive an information command sent by the network management device for querying the management configuration information of the primary network device.

The information sending unit 902 is adapted to send response information to the network management device in response to the information command received by the information query receiving unit 901, where the response information includes the management configuration information of the primary network device.

In the embodiment, the network device refers to the secondary network device. Likewise, the primary network device is relative to the secondary network device. A primary network device refers to an object whose management configuration information is queried; and a secondary network device may be the primary network device itself, or an object which includes the primary network device and other network management devices or servers. The primary network device, other network management devices or servers may be called a network device, and may be called a secondary network device only if management configuration information can be queried from them, which is the same hereinafter. The secondary network device can provide management configuration information that includes data and formats stipulated uniformly in a specific field such as an industrial field or a manufacturer field, maintain the management configuration information according to the unified format and contents, and provide the outside with unified modes of querying, sending, and receiving management configuration information and querying the type of the primary network device uniformly. In this way, the primary network devices of different types in a specific field can be managed by the network management device conveniently.

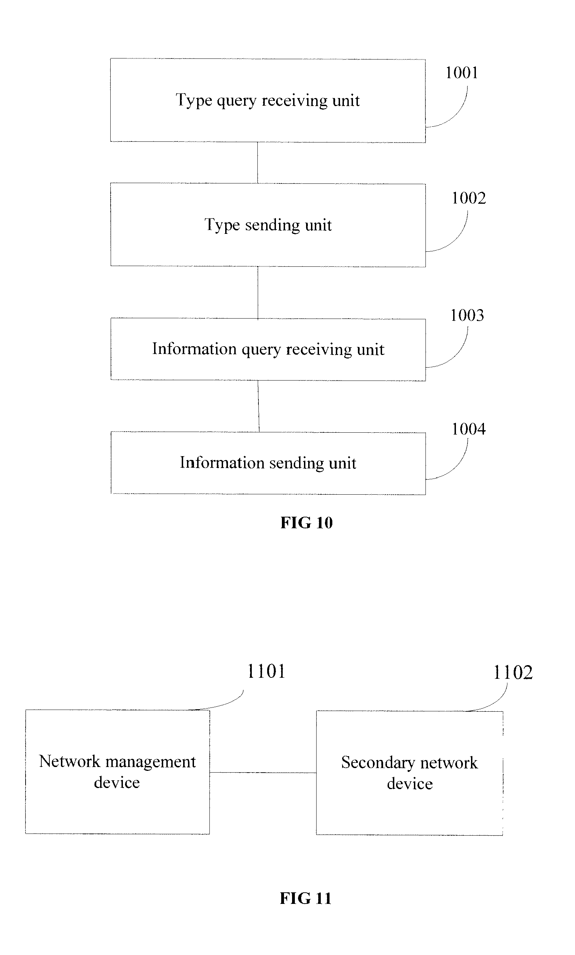

Figure 10 shows a network device in the second embodiment of the present invention. The network device includes: a type query receiving unit 1001, adapted to receive a type command sent by the network management device for querying the type of the primary network device; a type sending unit 1002, adapted to send response information to the network management device in response to the type command received by the type querying unit 1001, where the response information includes the type of the primary network device; an information query receiving unit 1003, adapted to receive an information command sent by the network management device for querying the management configuration information of the primary network device; and an information sending unit 1004, adapted to send response information to the network management device in response to the information command received by the information query receiving unit 1003, where the response information includes the management configuration information of the primary network device.

In the embodiment, a mapping relation already exists, which facilitates the network device to search for the management configuration information. If no such information is found, a new mapping relation may be created, namely, the network management device may interconnect the primary network devices of new types which increase continuously. For the subsequently connected primary network devices of the same type, the network management device manages them directly through the existing management configuration information. The secondary network device interconnects with the network management device conveniently by sending type information, or by sending type information and management configuration information.

Figure 11 shows a network system provided in the first embodiment of the present invention. The network system includes: a network management device1101, adapted to send an information command to a secondary network device 1102 to query the management configuration information of a primary network device after detecting that the primary network device is connected, receive response information sent by the secondary network device 1102 in response to the information command, the response information including the management configuration information of the primary network device and use the management configuration information to manage the primary network device; and a secondary network device 1102, adapted to receive the information command sent by the network management device 1101 for querying the management configuration information of the primary network device and send response information to the network management device 1101 in response to the information command, the response information including the management configuration information of the primary network device.

The secondary network device 1102 may be the primary network device itself.

In the embodiment, the network management device queries the management configuration information for all connected primary network devices in the specified way, the secondary network device sends the found management configuration information to the network management device in the specified way, and the network management device receives the management configuration information in the specified way. In the network management system in the embodiment, the network management device in a specific field may manage the primary network device of a new type in a specific field.

In a network system, the network management device 1101 is further adapted to send a type command to the secondary network device 1102 to query the type of the primary network device; receive response information sent by the secondary network device 1102 in response to the type command, where the response information includes the type of the primary network device; search for the management configuration information in a mapping relation with the type of the primary network device according to the received type of the primary network device; send an information command to the secondary network device 1102 to query the management configuration information of the primary network device, when no management configuration information in a mapping relation with the type of the primary network device is found; receive response information in response to the information command, where the response information includes the management configuration information of the primary network device; create a mapping relation between the type of the primary network device and the management configuration information of the primary network device; use the management configuration information to manage the primary network device; use the management configuration information in a mapping relation with the type of the primary network device to manage the primary network device, when any management configuration information in a mapping relation with the type of the primary network device is found.

The secondary network device 1102 is further adapted to receive a type command from the network management device 1101 for querying the type of the primary network device; and send response information in response to the type command, where the response information includes the type of the primary network device.

That is to say, in the foregoing solution, the network management device creates a mapping relation between the found type of the primary network device and the corresponding management configuration information. For subsequently connected primary network devices of the same type, the network management device search for the management configuration information in a mapping relation with the found type of the primary network device. If any such management configuration information is found, the network management device uses the management configuration information to manage the primary network device. If no such information is found, the network management device queries the secondary network device for the management configuration information, and then creates a mapping relation between the found type of the primary network device and the management configuration information. This process recurs again and again so that the network management device can manage the primary network devices of new types.

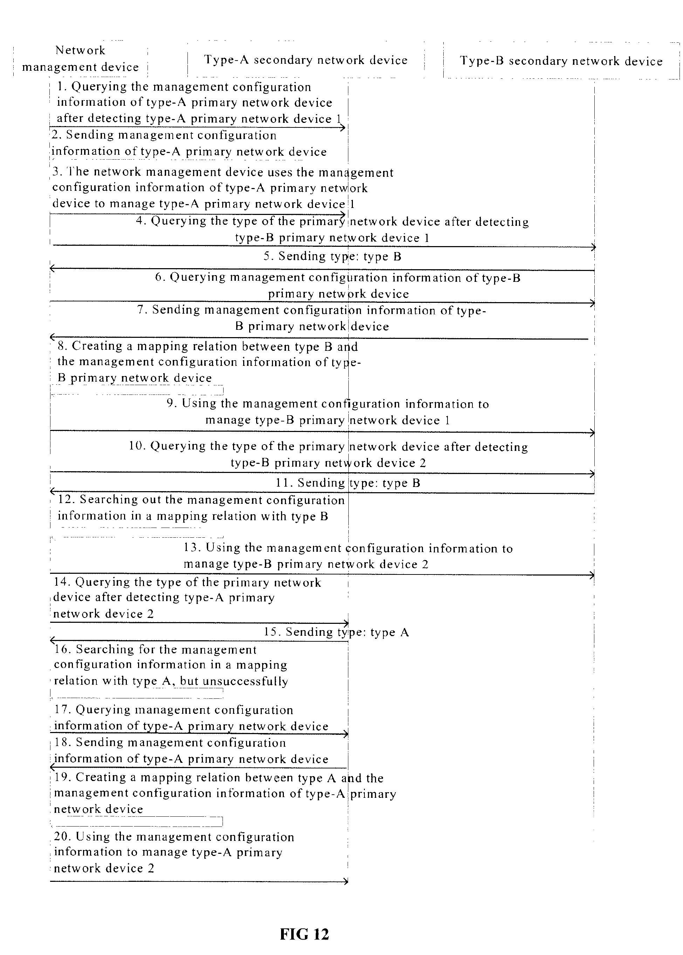

Figure 12 shows a network system in the second embodiment of the present invention. The network system includes:

Step 1 to step 3 are about dynamic interaction without mapping relation.

Step 1: After detecting that a type-A primary network device 1 is connected, the network management device queries a type-A secondary network device for the management configuration information of type-A primary network device.

Step 2: The type-A secondary network device sends the management configuration information of the type-A primary network device to the network management device.

Step 3: The network management device uses the management configuration information of type-A primary network device to manage type-A primary network device 1.

Steps 4 ∼ 9 are about dynamic interaction of creating a mapping relation initially.

Step 4: After detecting the type-B primary network device 1, the network management device queries a type-B secondary network device for the type of the type-B primary network device.

Step 5: The type-B secondary network device sends "type B" to the network management device.

Step 6: The network management device queries the management configuration information of the type-B primary network device.

Step 7: The type-B secondary network device sends the management configuration information of the type-B primary network device to the network management device.

Step 8: The network management device creates a mapping relation between the type-B primary network device and the management configuration information of the type-B primary network device.

Step 9: The network management device uses the management configuration information of the type-B primary network device to manage type-B network device 1.

The foregoing step 4 and step 5 for obtaining the type may occur before or after steps 6 and 7 for obtaining the management configuration information. The type may be obtained before or after the management configuration information, or the type and the management configuration information are obtained simultaneously.

Steps 10 ∼ 13 are about dynamic interaction that occurs when management configuration information can be searched out.

Step 10: After detecting the type-B primary network device 2, the network management device queries the type-B secondary network device for the type of the type-B primary network device.

Step 11: The type-B secondary network device sends "type B" to the network management device.

Step 12: The network management device finds the management configuration information in a mapping relation with the type-B primary network device.

Step 13: The network management device uses the management configuration information of the type-B primary network device to manage type-B primary network device 2.

Steps 14 ∼ 20 are about dynamic interaction that occurs when no management configuration information is found.

Step 14: After detecting the type-A primary network device 2, the network management device queries the type-A secondary network device for the type of the type-A primary network device.

Step 15: The type-A secondary network device sends "type A" to the network management device.

Step 16: The network management device searches for the management configuration information in a mapping relation with the type-A primary network device, but fails.

Step 17: The network management device queries type-A secondary network device for the management configuration information of the type-A primary network device.

Step 18: The type-A secondary network device sends the management configuration information of the type-A primary network device to the network management device.

Step 19: The network management device creates a mapping relation between the type-A primary network device and the management configuration information.

Step 20: The network management device uses the management configuration information of the type-A primary network device to manage type-A primary network device 2.

The steps in the embodiment do not restrict the specific steps in the implementation process of the present invention. In the embodiment, a network management device can manage new types of network devices.

It is understandable to those skilled in the art that all or partial steps of the preceding embodiments can be implemented by hardware instructed by programs. The programs may be stored in a computer readable storage medium. When such programs are running, the process includes the following steps: sending an information command to the secondary network device to query the management configuration information of the primary network device, after detecting that the primary network device is connected; receiving the response information sent by the secondary network device in response to the information command, where the response information includes the management configuration information of the primary network device; and using the management configuration information to manage the primary network device; and/or the following steps: receiving the information command sent by the network management device for querying the management configuration information of the primary network device; and sending response information to the network management device in response to the information command, where the response information includes the management configuration information of the primary network device.

In the embodiments of the invention, the network device may maintain the management configuration information into unified formats and contents according to the data types and formats included in the management configuration information stipulated uniformly in a specific field such as an industrial field or a manufacturer field, and provide the outside with unified modes of querying, sending and receiving management configuration information and the modes of querying, sending and receiving the type of the network device uniformly. That is to say, the network management device and the network device have mutually corresponding modes of querying, sending and receiving management configuration information and network device type (for example, querying through a file path, FTP, or response commands, sending through character streams), and the general management configuration information of the uniform format is applied. In this way, the coupling between the network management system and the network device is reduced, and the network management system can manage unknown devices which comply with the specifications, thus improving the capability of interconnection between the network management device and the network device. Moreover, it is not necessary to maintain much management configuration information, thus improving the maintainability of the network management system and reducing the maintenance costs.

Detailed above are a method, device and system for managing network devices in embodiments of the present invention. Although the invention is described through some exemplary embodiments, the invention is not limited to such embodiments. It is apparent that those skilled in the art can make various modifications and variations to the invention without departing from the spirit and scope of the invention.

## Claims

1. A network device management method, comprising:
sending an information command to a secondary network device to query management configuration information of a primary network device if detecting that the primary network device is connected;
receiving response information sent by the secondary network device in response to the information command, wherein the response information comprises the management configuration information of the primary network device; and
using the management configuration information to manage the primary network device.

2. The network device management method according to claim 1, further comprising:
sending a type command to query a type of the primary network device to the secondary network device after received the primary network device is connected;
receiving response information sent by the secondary network device in response to the type command, wherein the response information comprises the type of the primary network device; and
establishing a mapping relation between the type of the primary network device and the management configuration information of the primary network device.

3. The network device management method according to claim 1 or 2, wherein after receiving the response information sent by the secondary network, the method further comprises:
querying the management configuration information in the mapping relation with the type of primary network device;
entering step of sending a command to query the management configuration information of the primary network device to the secondary network device if the management configuration information in the mapping relation with the type of primary network device is not queried; and
using the management configuration information in the mapping relation with the type of primary network device to manage the primary network device.

4. The method according to any one of claims 1-3, wherein the secondary network device and the primary network device is a same network device.

5. The method according to any one of claims 1-3, wherein the secondary network device further comprises other network management device or server.

6. A network device management method, comprising:
receiving an information command sent from a network management device to query management configuration information of a primary network device; and
sending response information in response to the information command to the network management device, wherein the response information comprises the management configuration information of the primary network device.

7. The method according to claim 6, further comprising:
receiving a type command sent from the network management to query type of the primary network device; and
sending response information in response to the type command to the network management device, wherein the response information comprises the type of the primary network device.

8. A network management device, comprising:
a detecting unit, adapted to detect whether a primary network device is connected;
an information querying unit, adapted to send an information command to a secondary network device to query management configuration information of the primary network device if detecting that the primary network device is connected;
an information receiving unit, adapted to receive response information from the secondary network device in response to the information command after that the information querying unit sends the information command to the secondary network device to query management configuration information of the primary network device, wherein the response information comprises the management configuration information of the primary network device; and
a device management unit, adapted to use the management configuration information to manage the primary network device.

9. The network management device according to claim 8, further comprising:
a type querying unit, adapted to send a type command to the secondary network device to query a type of the primary network device after the detecting unit detects that the primary network device is connected;
a type receiving unit, adapted to receive a response information from the secondary network device in response to the type command after the type querying unit sending the type command to the secondary network device to query the type of the primary network device, wherein the response information comprises the type of the primary network device; and
a mapping creating unit, adapted to create a mapping relation between the type of the primary network device and the management configuration information of the primary network device.

10. The network management device according to claim 8 or 9, further comprising
an information searching unit, adapted to search for the management configuration information in the mapping relation with the type of primary network device according to the mapping relation created by the mapping creating unit after the type receiving unit receives the type of the primary network device;
the information querying unit, adapted to send the information command to the secondary network device to query the management configuration information of the primary network device when the information searching unit finds no management configuration information in a mapping relation with the type of the primary network device; and
the device management unit, adapted to use the management configuration information in the mapping relation with the type of the primary network device to manage the primary network device when the he information searching unit finds the management configuration information in the mapping relation with the type of the primary network device.

11. The network management device according to any one of claim 8-10, wherein the primary network device and the secondary network device is a same network device..

12. The network management device according to any one of claims 8-10, wherein the secondary network device further comprises other network management device or server.

13. A network device, comprising:
an information query receiving unit, adapted to receive an information command sent by a network management device for querying management configuration information of a primary network device; and
an information sending unit, adapted to send response information to the network management device in response to the information command received by the information query receiving unit, wherein the response information comprises the management configuration information of the primary network device.

14. The network device according to claim 13, further comprising:
a type query receiving unit, adapted to receive a type command sent by the network management device to query type of the primary network device; and
a type sending unit, adapted to send response information in response to the type command received by the type query receiving unit, wherein the response information comprises the type of the primary network device.

15. A network system, comprising:
a network management device according to one of claims 8-12; and
a network device according to one of claims 13-14.
